# EUROPEAN PATENT APPLICATION

(11) **EP 1 923 305 A1**
(43) Date of publication of application: **21.05.2008**
(21) Application number: 07022226.0
(22) Date of filing: 15.11.2007
(51) Int. Cl.: B62K 11/04, B62K 19/12

(54) **Vehicle body frame**

(30) Priority: 15.11.2006 JP 2006308757; 19.10.2007 JP 2007272716; 01.02.2007 JP 2007022581
(71) Applicant: Yamaha Hatsudoki Kabushiki Kaisha, Iwata-shi, Shizuoka 438-8501 (JP)
(72) Inventor: Miyashiro, Shidehiko, Iwata-shi Shizuoka-ken 438-8501 (JP); Okamoto, Toshio, Iwata-shi Shizuoka-ken 438-8501 (JP)
(74) Representative: Grünecker, Kinkeldey, Stockmair & Schwanhäusser Anwaltssozietät

(57) **Abstract**

The present application relates to a body frame (9) for a vehicle (1), comprising a head pipe (2), a first frame member (3) connected to the head pipe (2) and supporting a rear arm (20) to which a rear wheel (21) is attached, and a second frame member (4) connected at one end to the head pipe (2) and at the other end to the first frame member (3).

## Description

The present invention relates to a body frame and to a vehicle, and in particular to a body frame including a head pipe and to a vehicle with such a body frame.

Conventionally, a body frame including a head pipe has been known (see Patent Document 1, for example). In Patent Document 1, a body frame is disclosed. The body frame includes a head pipe, pivot plates supporting a rear swing arm (rear arm) to which a rear wheel is attached, a main frame connecting between the head pipe and the pivot plates and supporting a fuel tank, a down tube attached to a lower portion of the head pipe, a gusset (reinforcing plate) connecting the down tube with the main frame, a tension pipe and a mounting stay, and a lower frame joining a lower portion of the down tube with a lower portion of the pivot plate. The body frame includes a gusset (reinforcing plate), and the tension pipe and the mounting stay to strengthen connection between the head pipe and the main frame. The gusset connects the down tube attached to the lower portion of the head pipe with the main frame.

Patent Document 1: JP-A-2001-278158

However, according to the structure disclosed in Patent Document 1, the body frame includes the main frame join the pivot plate supporting the rear swing arm, to which the rear wheel is attached, and the head pipe. In addition, to secure connection between the head pipe and the main frame, the body frame includes the gusset (reinforcing plate), the tension pipe, and the attaching stay. The gusset connects the main frame to the down tube attached to the head pipe. Thus, this structure is disadvantageous in that the number of parts of the body frame is increased.

The present invention has been conceived to solve the problem, and an object of the invention is to provide a body frame that allows suppressing an increase in the number of parts, and a vehicle with such a body frame.

This objective is solved in an inventive manner by a body frame, in particular for a vehicle, comprising: a head pipe; a first frame member connected to the head pipe and supporting a rear arm to which a rear wheel is attached; and a second frame member connected at one end to the head pipe and at the other end to the first frame member.

Preferably, the first frame member is directly connected to the head pipe.

Further, preferably the head pipe comprises a body section which extends rearward and includes a frame fixing part connected to the first frame member.

Still further, preferably a boss for supporting an engine is formed integrally on the first frame member.

Therein, it is beneficial if the head pipe has an insertion hole, into which a steering shaft is to be inserted, and a first recess, of which depth extends in the same direction as the insertion hole.

It is further beneficial if one end of the second frame member is connected to a portion of the head pipe higher than a portion at which the first frame member is connected to the head pipe.

Preferably, the other end of the second frame member is connected to an upper portion of the first frame member.

Further, preferably at least one of the head pipe and the first frame member has a C-shaped cross section.

Still further, preferably the first frame member is formed by a pair of the first frames, and the pair of first frames extend rearward with a predetermined spacing therebetween in plan view, and approach to each other toward the head pipe.

Yet further still, preferably the first frame member includes a connecting part to be connected to the second frame member by being pinched thereby, and the connecting part has a second recess inside of a portion at which the connecting part is pinched by the second frame member.

Therein, it is beneficial if the first frame member is the main frame and the second frame member is the tank rail or a reinforcement member arranged in that a front end of the tank rail or of the reinforcement member is connected to the head pipe, and a rear end of the tank rail or of the reinforcement member is connected to the main frame.

It is further beneficial if at least one of the first frame member and the head pipe is formed by semi-solid die casting.

There is also provided a vehicle, in particular motorcycle, comprising: a rear wheel; a rear arm to which the rear wheel is attached; and a body frame according to one of the above embodiments, having a head pipe; a first frame member connected to the head pipe and supporting the rear arm; and a second frame member connected at one end to the head pipe and at the other end to the first frame member.

According to a preferred embodiment, the vehicle further comprises a fuel tank, wherein the second frame member supports the fuel tank.

There is also provided a head pipe for use in a body frame for a vehicle, in particular according to one of the above embodiments, comprising a first section for accommodating part of a front fork of the vehicle, and a body section extending downward from the rear of the first section which includes a frame fixing portion for connection with a main frame of the vehicle.

In the following, the present invention is explained in greater detail with respect to several embodiments thereof in conjunction with the accompanying drawings, wherein:
- FIG. 1: is a side view showing an overall configuration of a motorcycle according to a preferred embodiment of the present teaching,
- FIG. 2: is a perspective view showing a body frame of the motorcycle according to the embodiment shown in FIG. 1,
- FIG. 3: is a perspective view showing a main frame and its surroundings of the motorcycle according to the embodiment shown in FIG. 1,
- FIG. 4: is a side view showing the main frame and its surroundings of the motorcycle according to the embodiment shown in FIG. 1,
- FIG. 5: is a plan view showing the main frame and its surroundings of the motorcycle according to the embodiment shown in FIG. 1.
- FIG. 6: is a side view showing a structure of a head pipe of the motorcycle according to the embodiment shown in FIG. 1,
- FIG. 7: is a side view taken along line 100-100 of FIG. 4,
- FIG. 8: is a side view taken along line 200-200 of FIG. 4,
- FIG. 9: is a side view taken along line 300-300 of FIG. 4,
- FIG. 10: is a side view taken along line 400-400 of FIG. 4,
- FIG. 11: is a side view taken along line 500-500 of FIG. 4,
- FIG. 12: is a side view for explaining the structure of a body frame of a motorcycle according to a second embodiment of the present teaching, and
- FIG. 13: is a plan view for explaining the structure of a body frame of a motorcycle according to a second embodiment of the present teaching.

### Description of Reference Numerals:

1 motorcycle (vehicle)
2, 62 Head pipe
2a insertion hole
2f, 2g weld part (frame fixing portion)
2h recess (first recess)
3, 63 main frame (first frame)
3c, 3d connecting part
3e recess (second recess)
3g boss
4 tank rail (second frame)
9 body frame
11 steering shaft
15 engine
20 rear arm
21 rear wheel
25 fuel tank
62d, 62e weld reinforcement (frame fixing portion)
64 reinforcement member (second frame)

Preferred embodiments of the present teaching will be described hereinafter with reference to the drawings.

### First Embodiment

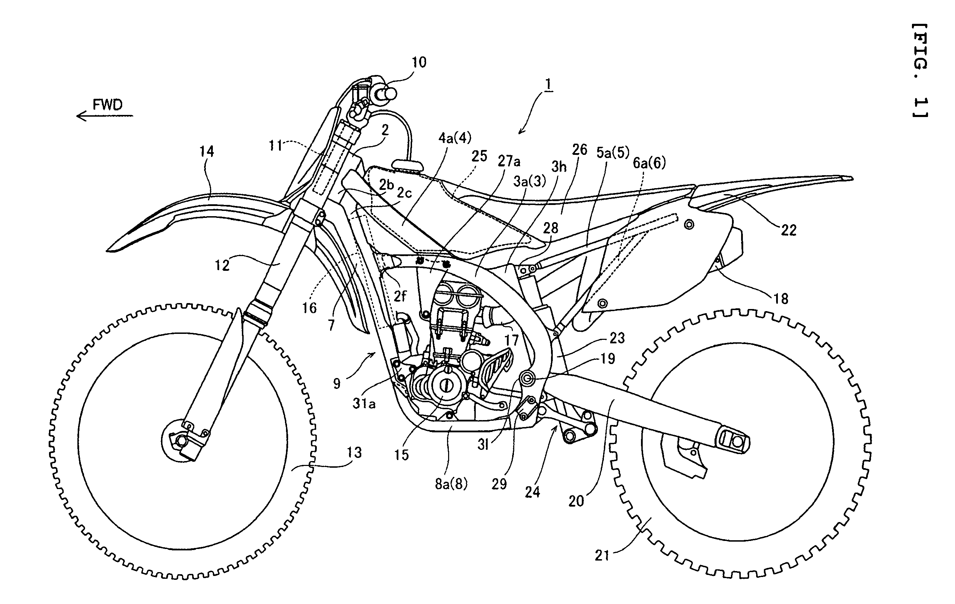

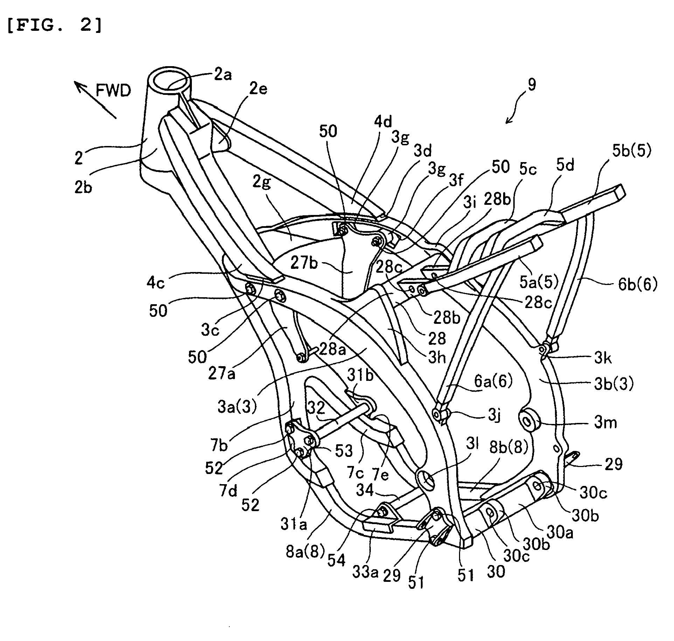

FIG. 1 is a side view illustrating the entire configuration of a motorcycle according to a first embodiment of the present teaching. FIGs. 2 through 11 are explanatory views of a structure of a body frame of the motorcycle according to the first embodiment shown in FIG. 1. In the first embodiment, a motorcycle is taken as an example of the vehicle according to the present teaching. The direction indicated by arrow FWD in the drawings is a forward traveling direction of the motorcycle. The structure of the motorcycle 1 according to the first embodiment of the teaching will be described below with reference to FIGS. 1 through 11.

Referring to the overall configuration shown in FIG. 1, the motorcycle 1 according to the first embodiment of the teaching has a main frame 3 of which front end is directly connected to a head pipe 2. The main frame 3 extends in a downwardly rearward direction. This main frame 3 is an example of the "first frame" of the present teaching.

In the first embodiment, a tank rail 4 is interposed between a rear portion of the head pipe 2 and an upper portion of the main frame 3. More specifically, a front end (one end) of the tank rail 4 is connected to the rear portion of the head pipe 2, and a rear end (the other end) of the tank rail 4 is connected to the upper portion of the main frame 3. This tank rail 4 is an example of the "second frame" of the present teaching. A seat rail 5 extending in an upwardly rearward direction is connected to the main frame 3. A backstay 6 is connected between a rear end of the main frame 3 and a rear portion of the seat rail 5. A down tube 7 is disposed under the head pipe 2. A lower frame 8 connecting the down tube 7 and the lower end of the main frame 3 is provided at a lower end of the down tube 7. The head pipe 2, the main frame 3, the tank rail 4, the seat rail 5, the backstay 6, the down tube 7, and the lower frame 8 form a body frame 9. The structure of the body frame 9 will be described in detail later.

A handlebar 10 is pivotally disposed on the top of the head pipe 2. A steering shaft 11, which is inserted to the later described insertion hole 2a (see FIG.2) of head pipe 2, is attached to the bottom of the handlebar 10. A pair of front forks 12 are disposed below the head pipe 2. A front wheel 13 is rotatably attached to lower ends of the pair of front forks 12. A front fender 14 is disposed above the front wheel 13 to cover an upper part of the front wheel 13.

An engine 15 is disposed below the main frame 3. A radiator 16 for cooling the engine 15 is disposed at a position upward and forward of the engine 15. An exhaust pipe 17 is connected to a rear portion of the engine 15. The exhaust pipe 17 extends rearward to be connected to a muffler 18.

A pivot shaft 19 is provided through the main frame 3. The pivot shaft 19 supports the front end of the rear arm 20 for vertical pivotal movement. A rear wheel 21 is rotatably attached to the rear end of the rear arm 20. Above the front wheel 21, a front fender 22 is disposed to cover an upper part of the front wheel 21.

A rear suspension 23 is disposed at a rear portion of the main frame 3. The rear suspension 23 is connected to the rear arm 20 via a coupling member 24. This configuration allows absorbing a shock caused by vertical pivotal movement of the rear arm 20.

A fuel tank 25 made of a resin is disposed on the tank rail 4. The fuel tank 25 is sandwiched between a left tank rail 4a and a right tank rail 4b (see FIG. 2), which will be described later, of the tank rail 4. A seat 26 is disposed to the rear of the fuel tank 25.

The structure of the body frame 9 will be described in detail below.

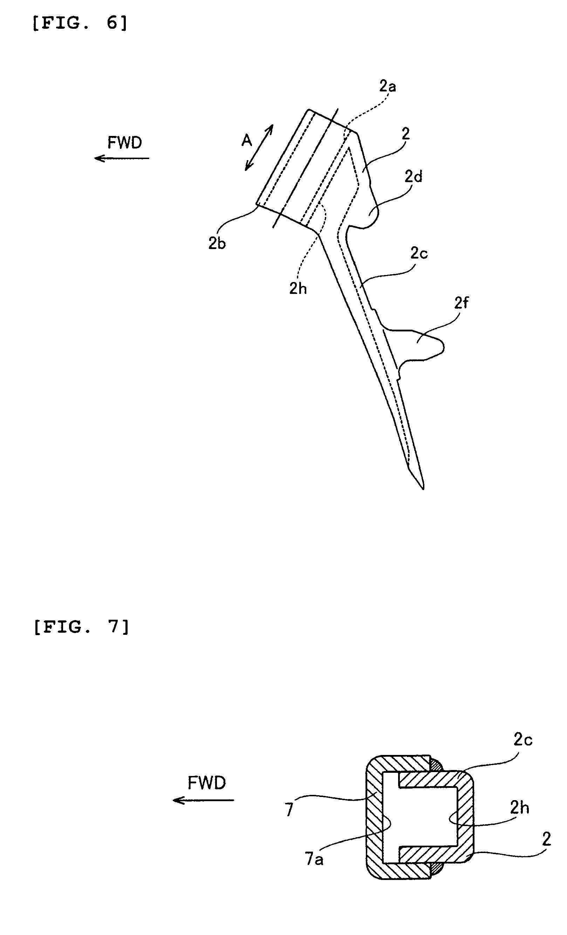

In the first embodiment, the head pipe 2 is formed of aluminum by semi-solid die-casting. Semi-solid die casting is one of methods of die casting metal that is a mixture of a liquid and solid phase. The semi-solid die casting process permits to improve flexibility in shape and accuracy as compared with forging, as well as to increase the strength of a casting as compared with that obtained by common die casting. As shown in FIG. 6, the head pipe 2 includes a cylindrical section 2b and a body section 2c. The insertion hole 2a extending in a predetermined direction (direction A) is defined through the cylindrical section 2b. The body section 2c extends downward from the rear of the cylindrical section 2b.

As shown in FIGs. 2 and 6, weld reinforcements 2d (see FIG. 6) and 2e (see FIG. 2), protruding in a leftward and rearward direction and a rightward and rearward direction respectively, are provided on the body section 2c of the head pipe 2 at positions behind the cylindrical section 2b. Meanwhile, left and right sides in the first embodiment are the left and right sides as viewed from a rider facing the forward traveling direction (the direction indicated by arrow FWD), respectively. Weld parts 2f (see FIG. 6) and 2g (see FIG. 2) protruding in a leftward and rearward direction and a rightward and rearward direction, respectively, are provided on the head pipe 2 at positions lower than the weld reinforcements 2d (see FIG. 6) and 2e (see FIG. 2) of the head pipe 2, respectively. Each of the weld parts 2f and 2g is an example of the "frame fixing portion" of the present teaching.

In the first embodiment, the head pipe 2 is formed by semi-solid die casting, thereby making it possible to easily form the head pipe 2 integrally with the weld reinforcements 2d and 2e and the weld parts 2f and 2g.

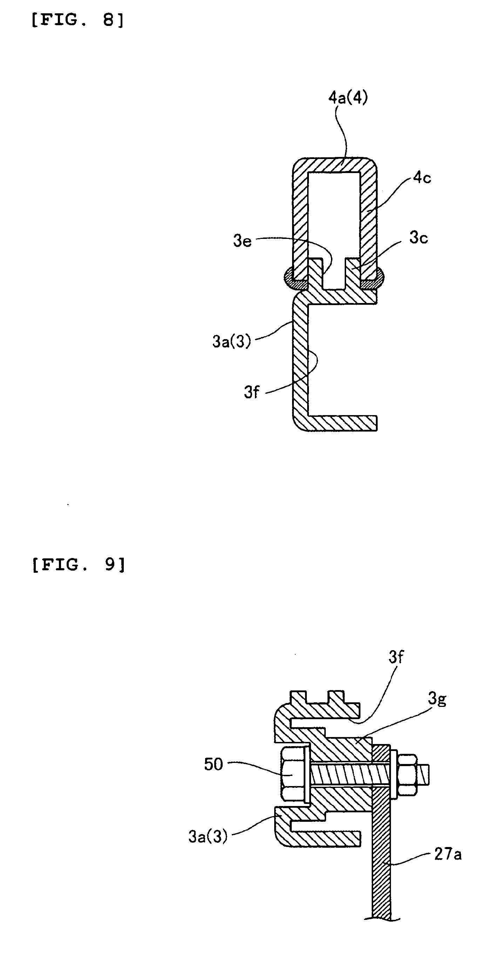

In the first embodiment, as shown in FIG. 6, a recess 2h is defined in a front surface of the body section 2c. The depth of the recess 2h extends in the same direction (direction A) as the insertion hole 2a. In other words, as shown in FIG. 7, the body section 2c has a C-shaped cross section. The recess 2h is an example of the "first recess" of the present teaching.

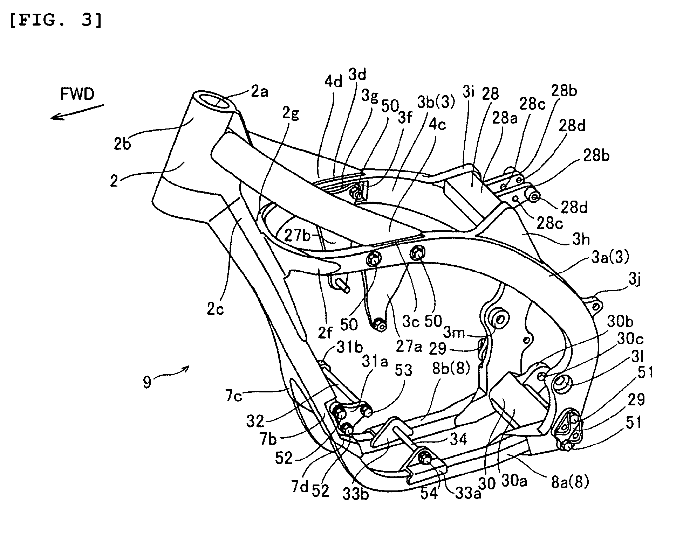

In the first embodiment, the main frame 3 (see FIG. 2) is formed of aluminum by semi-solid die-casting. As shown in FIGs. 2 and 3, the main frame 3 is formed by a left frame 3a located on the left side and a right frame 3b located on the right side.

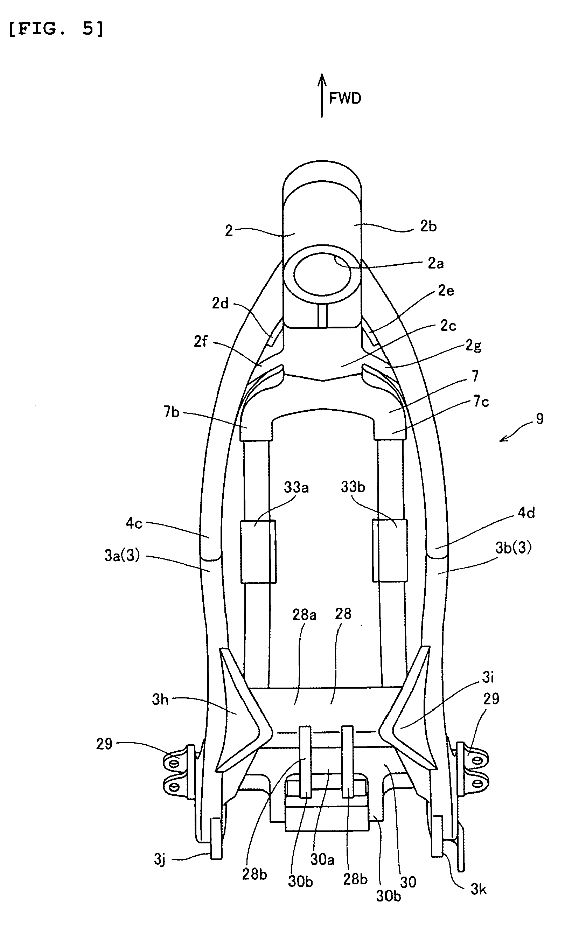

In the first embodiment, as shown in FIGs. 2 and 5, the left frame 3a and the right frame 3b of the main frame 3 are arranged to extend rearward and to have a predetermined spacing therebetween in a widthwise direction of a vehicle body in plan view. Front ends of the left frame 3a and the right frame 3b are welded to the weld parts 2f and 2g of the body section 2c of the head pipe 2, respectively. More specifically, the left frame 3a and the right frame 3b are arranged to assume a U-shape such that the left and right frames 3a and 3b approach to each other toward the body section 2c of the head pipe 2.

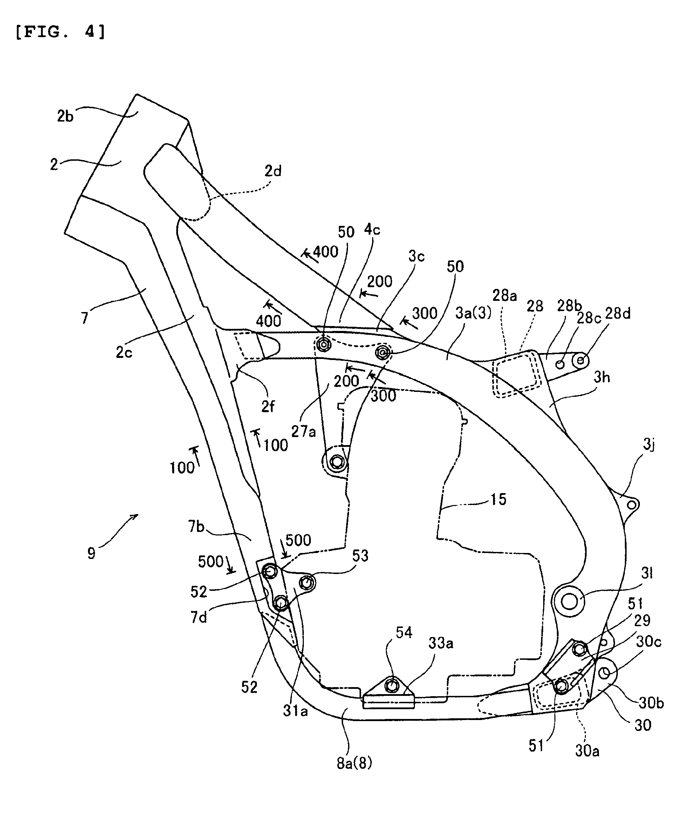

As shown in FIGs. 2 and 4, connecting parts 3c and 3d, to which the tank rail 4 is to be welded, are formed on upper parts of the left and right frames 3a and 3b, respectively. Each of the connecting parts 3c and 3d is an example of the "connecting part" of the present teaching. As shown in FIG. 8, the connecting parts 3c and 3d (see FIG. 2) are welded such that the connecting parts 3c and 3d are pinched between connecting parts 4c and 4d (see FIG. 2) of the tank rail 4 to thus be fitted therein. In the first embodiment, a recess 3e is defined in an inner surface of each of the welding portions 3c and 3d (see FIG. 2) at a position into which a corresponding one of the connecting parts 4c and 4d (see FIG. 2) of the tank rail 4 is to be fitted. The recess 3e is an example of the "second recess" of the present teaching.

In the first embodiment, as shown in FIGs. 2 and 9, a portion of each of the left frame 3a and the right frame 3b, near which the tank rail 4 is welded to the left frame 3a or the right frame 3b, includes a C-shaped cross section having the recess 3f therein. A boss 3g is formed integrally on an inside of the recess 3f of each of the left and right frames 3a and 3b. Support plates 27a and 27b (see FIG. 2) supporting the engine 15 (see FIG. 4) are fixed to the bosses 3g with screws 50.

In the first embodiment, the main frame 3 is thus formed by semi-solid die casting, thereby making it possible to form the main frame 3 integrally with the recesses 3e and the bosses 3g easily.

As shown in FIG. 2, bracket welding portions 3h and 3i are formed integrally on the left and right frames 3a and 3b, respectively, at their longitudinal centers. As shown in FIG. 5, each of the bracket welding portions 3h and 3i extends in an upwardly inward direction. As shown in FIGs. 2 and 3, a rear suspension bracket 28 that supports an upper portion of the rear suspension 23 (see FIG. 1) is welded to the bracket welding portions 3h and 3i. The rear suspension bracket 28 includes a cross pipe 28a formed by extrusion and two mounting parts 28b formed integrally with the cross pipe 28a. A rear-suspension support hole 28c and a seat-rail support hole 28d are defined in each of the mounting parts 28b.

Mounting parts 3j and 3k (see FIG. 2), to which the backstay 6 (see FIG. 2) are to be attached, are formed on the left frame 3a at a portion in a rearward direction of the bracket welding portion 3h and on the right frame 3b at a portion in a rearward direction of the bracket welding portion 3i.

Fixing parts 3l and 3m for fixing the pivot shaft 19 (see FIG. 1) are formed in the left and right frames 3a and 3b at their lower portions, respectively. A footrest holding plate 29 for holding a footrest (not shown) is fixed to each of the left frame 3a at a portion lower than the fixing part 3l and to the right frame 3b at a portion lower than the fixing part 3m with a screw 51.

Coupling member brackets 30 for attaching the coupling members 24 (see FIG. 1) are welded to the left and right frames 3a and 3b at their lower ends, respectively. Each coupling member bracket 30 includes a cross pipe 30a formed by extrusion and two mounting parts 30b formed integrally with the cross pipe 30a. A coupling-member support hole 30c is defined in each mounting part 30b. As shown in FIGs. 3 and 5, a front portion of the lower end of each of the left and right frames 3a and 3b is curved inward toward the front.

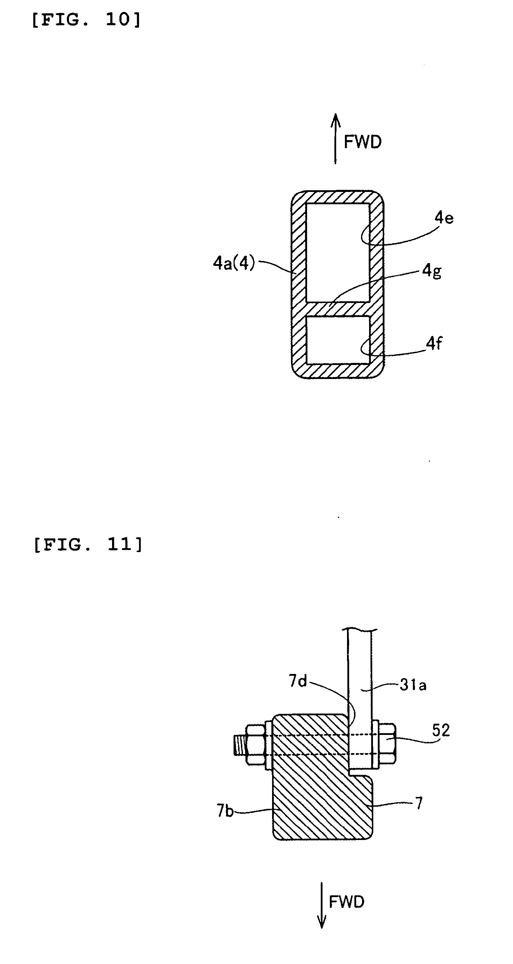

The tank rail 4 is formed of aluminum by extrusion. The tank rail 4 is formed by a left tank rail 4a located on the left side and a right tank rail 4b located on the right side. As shown in FIG. 10, the tank rail 4 has, in cross section, two holes 4e and 4f and a wall 4g partitioning between the holes 4e and 4f. The tank rail 4 may have a single hole and no wall, thereby having a rectangular cross section. As shown in FIG. 2, a front end of the left tank rail 4a is welded to the head pipe 2 at an upper left portion of the body section 2c and at the weld reinforcement 2d (see FIG. 5). The connecting part 4c on the rear end of the left tank rail 4a is welded to the connecting part 3c of the left frame 3a. A front end of the right tank rail 4b is welded to the head pipe 2 at an upper right portion of the body section 2c and at the weld reinforcement 2e. The connecting part 4d on the rear end of the right tank rail 4b is welded to the connecting part 3d of the left frame 3b.

The seat rail 5 is formed by a left rail 5a located on the left side, a right rail 5b located on the right side, and two reinforcing pipes 5c and 5d that connects the left rail 5a and the left rail 5b. Front ends of the left and right rails 5a and 5b are fixed in seat-rail support holes 28d (see FIG. 3) in the mounting part 28b of the rear suspension bracket 28.

The backstay 6 is formed by a left stay 6a located on the left side and a right stay 6b located on the right side. Upper ends of the left and right stays 6a and 6b are welded to the left and right rails 5a and 5b, respectively. A lower ends of the left stay and right stay are attached to the mounting part 3j on the left frame 3a and the mounting part 3k on the right frame 3b, respectively.

The down tube 7 is formed of aluminum by forging. As shown in FIG. 4, the down tube 7 is welded at its rear surface to the head pipe 2. As shown in FIG. 7, a portion of the down tube 7 welded to the head pipe 2 includes a C-shaped cross section having the recess 7a therein.

As shown in FIG. 2, a lower portion of the down tube 7 is bifurcated into a left tube 7b extending in a downwardly leftward direction and a right tube 7c extending in a downwardly rightward direction. A recess 7d and a recess 7e are respectively formed in the left tube 7b and the right tube 7c. As shown in FIG. 11, support plates 31 a and 31 b (see FIG. 2) are fixed in the recesses 7d and 7e (see FIG. 2), respectively, with screws 52. As shown in FIG. 2, a support bar 32 supporting the engine 15 (see FIG. 4) is fixed to the support plates 31 a and 31 b with screws 53.

The lower frame 8 is formed of aluminum by extrusion. The lower frame 8 is formed by a left lower frame 8a located on the left side and a right lower frame 8b located on the right side. Front ends of the left lower frame 8a and the right lower frame 8b are welded to lower ends of the left tube 7b and the right tube 7c, respectively. As shown in FIG. 3, support plates 33a and 33b are welded to top surfaces of the left and right lower frames 8a and 8b, respectively. A support bar 34 supporting the engine 15 (see FIG. 4) is fixed to the support plates 33a and 33b with screws 54. Rear ends of the left lower frame 8a and the right lower frame 8b are welded to front portions of lower ends of the left frame 3a and the right frame 3b, respectively.

In the first embodiment, as described above, the body frame 9 includes the main frame 3 directly connected to the head pipe 2 and supporting the rear arm 20 to which the rear wheel 21 is attached, and the tank rail 4 connected to the head pipe 2 at its front end and to the main frame 3 at its rear end. According to the configuration, the main frame 3 supporting the rear arm 20, to which the rear wheel 21 is attached, is connected to the head pipe 2, and the tank rail 4 secures connection between the head pipe 2 and the main frame 3. This allows suppressing an increase in the number of parts of the body frame 9 while securing the connection between the main frame 3 supporting the rear arm 20, to which the rear wheel 21 is attached, and the head pipe 2.

In the first embodiment, the head pipe 2 extends rearward and includes the weld parts 2f and 2g at which the main frame 3 is connected to the head pipe 2. This configuration allows easily and directly connecting the main frame 3 to the head pipe 2 at the weld parts 2f and 2g.

In the first embodiment, the boss 3g for supporting the engine 15 is formed integrally on the main frame 3. Hence, an increase in the number of parts required for supporting the engine 15 can be suppressed as compared with that required by another configuration, in which the boss 3g for supporting the engine 15 is formed separately from the main frame 3.

In the first embodiment, the insertion hole 2a, into which the steering shaft 11 is to be inserted, and the recess 2h having a depth extending in the same direction (direction A) as the insertion hole 2a are defined in the head pipe 2. This configuration allows, during a process of forming the head pipe 2 in a cavity die by semi-solid die casting, aligning a direction in which the cavity die is pulled out to the direction along which the insertion hole 2a extends, thereby forming the head pipe 2 having the recess 2h therein easily.

In the first embodiment, the left frame 3a and the right frame 3b of the main frame 3 are arranged to extend rearward and to have a predetermined spacing therebetween in a widthwise direction of a vehicle body in plan view, and the left frame 3a and the right frame 3b are arranged to form a U-shape such that the left and right frames 3a and 3b approach to each other toward the body section 2c of the head pipe 2. This arrangement allows increasing horizontal rigidity of the body frame 9.

In the first embodiment, the recess 3e is defined in an inner surface of each of the connecting parts 3c and 3d at the position into which the tank rail 4 is to be fitted, thereby attaining weight reduction of the main frame 3.

In the first embodiment, the main frame 3 and the head pipe 2 are formed by semi-solid die-casting. This allows reducing the size and weight of the main frame 3 and the head pipe 2 as compared with those formed by forging or common die-casting. Meanwhile, forging is less flexible in shape and less accurate than semi-solid die casting. When the main frame 3 and the head pipe 2 are to be formed by forging, each of the main frame 3 and the head pipe 2 must have a larger thickness so as to be formed into a recess (C-shape) or a shape with which a predetermined strength can be secured. This results in an increase of the main frame 3 and the head pipe 2 in size and weight. Meanwhile, a product formed by common die-casting is less strong than a product formed by semi-solid die-casting. Accordingly, when the main frame 3 and the head pipe 2 are to be formed by common die casting, it is necessary to increase the thickness of the main frame 3 and the head pipe 2 to secure a predetermined strength, which increases the sizes and weights of the main frame 3 and the head pipe 2.

### Second Embodiment

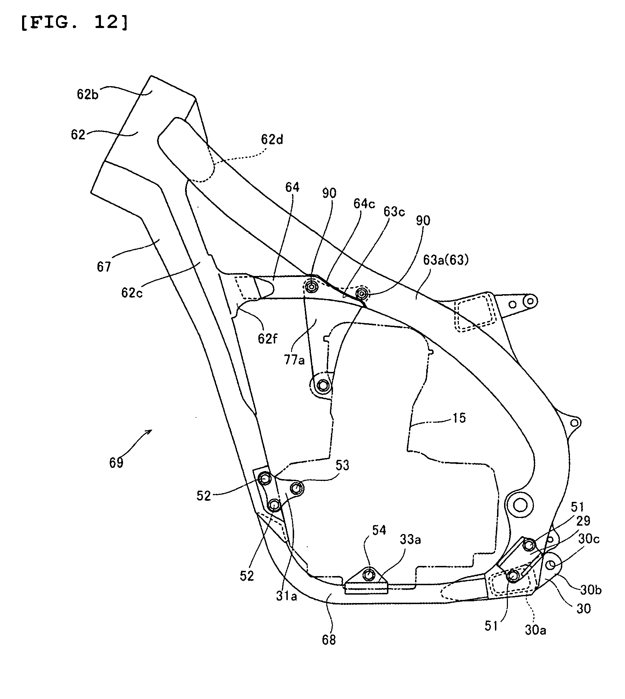

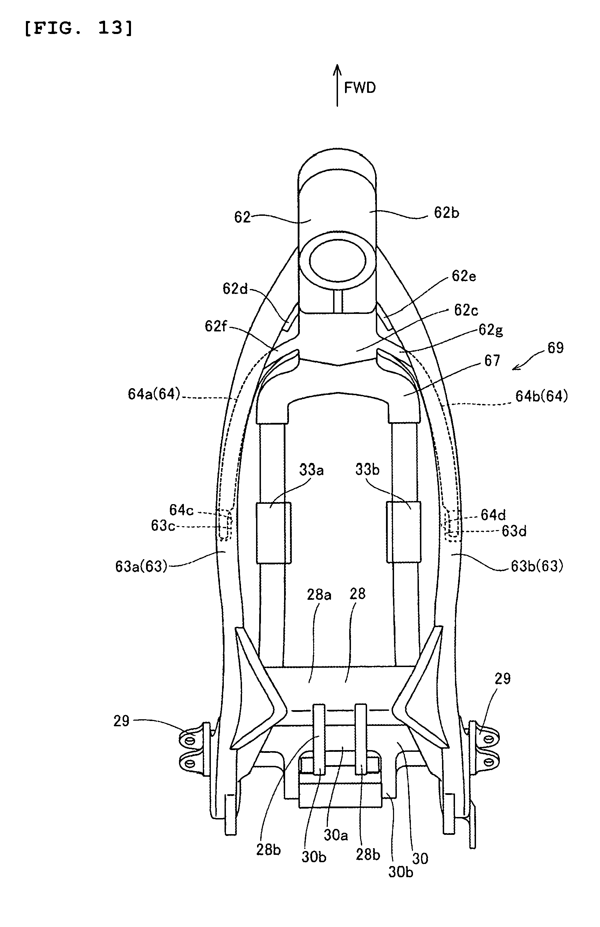

FIGs. 12 and 13 are explanatory views of a structure of a body frame of the motorcycle according to the second embodiment of the present teaching. The structure of the motorcycle according to the second embodiment of the present teaching will be described hereinafter with reference to FIGs. 12 and 13. In the second embodiment, differing from the first embodiment described above, an example, in which the front end of the main frame 63 is connected directly to the rear section of the cylindrical part 62b of head pipe 62, is described.

Referring to the overall configuration of motorcycle according to the second embodiment of the teaching shown in FIG. 12 the front end of the main frame 63 is directly connected to the head pipe 62.The main frame 63 extends in a downwardly rearward direction. This main frame 63 is an example of the "first frame" of the present teaching.

Here, in the second embodiment, the reinforcement member 64 is interposed between rear of the head pipe 62 and the main frame 63 in which a front end (one end) is connected to lower part than the part where the head pipe 62 of the main frame 63 is connected, and a rear end (the other end) is connected to a lower part of the main frame 63. This reinforcement member 64 is an example of the "second frame" of the present teaching. A down tube 67 is disposed under the head pipe 62. A lower frame 68 connecting the down tube 67 and the lower end of the main frame 63 is provided at a lower end of the down tube 67. The body frame 69 is configured with, the head pipe 62, the main frame 63, the reinforcement member 64, the down tube 67, the lower frame 68, the seat rail (not shown), and backstay (not shown).

In the second embodiment, the main frame 63 is formed of aluminum by semi-solid die-casting. As shown in FIG. 13, the main frame 63 is formed by a left frame 63a located on the left side and a right frame 63b located on the right side.

In the second embodiment, the left frame 63a and the right frame 63b of the mainframe 63 are located to extend rearward with a predetermined space in a vehicle width direction viewed in plan. Front ends of the left frame 63a and the right frame 63b are respectively welded to the weld reinforcements 62d and 62e formed in a rear section of cylindrical part 62b of the head pipe 62. The weld reinforcements 62d and 62e are an example of the "frame fixing portion" of the present teaching.

As shown in FIG. 12, the support plate 77a supporting the engine 15 and support plate (not shown) are fixed by the screws 90 in the vicinity of the part where the reinforcement member 64 of the left frame 63a and right frame 63b is connected.

The reinforcement member 64 is formed of aluminum by extrusion. As shown in FIG. 13, the reinforcement member 64 is formed by a left reinforcement member 64a located on the left side and a right reinforcement member 64b located on the right side. As shown in FIG. 12, a front end of the left reinforcement member 64a is welded to the head pipe 62 at a lower left portion of the body section 62c and at the welded section 62f. The connecting part 64c on the rear end of the left reinforcement member 64a is welded to the connecting part 63c of the left frame 63a. As shown in FIG. 13, a front end of the right reinforcement member 64b is welded to the lower right of the body section 62c of the head pipe 62 and welded section 62g. At the same time, the connecting part 64d of the rear end of the right reinforcement member 64b is welded to the connecting part 63d of the right frame 63b.

Other configurations of the second embodiment are same as those of the first embodiment.

In the second embodiment, as described above, one end of the reinforcement member 64 is connected to the lower place than which the main frame 63 of the head pipe 62 is connected to, therefore the relation between the main frame 63 and lower part of the head pipe 62 can be reinforced, and the rigidity of the main frame 63 can be improved.

In the second embodiment, as described above, the other end of the reinforcement member 64 is connected to the lower part of the main frame 63, therefore the relation between the main frame 63 and lower part of the head pipe 62 can be reinforced, and the rigidity of the main frame 63 can be improved.

The embodiments disclosed herein are to be considered as illustrative only in all respects and not imposing any limitation.

For example, in the first and second embodiment, an example application of the present teaching to a motorcycle has been described. However, the present teaching is not limited thereto, and can be applied to other vehicles such as an automobile, a bicycle, a tricycle, and an ATV (all terrain vehicle).

In the first and second embodiment, the example in which the main frame is directly connected to the head pipe has been described. However, the present teaching is not limited thereto, and the weld part (frame fixing portion) may be formed separately from the head pipe and the main frame may be connected to the head pipe via the weld part.

In the first and second embodiment, the example in which the head pipe and the main frame are formed by semi-solid die-casting has been described. However, the present teaching is not limited thereto, and the head pipe and the main frame may be formed by a process other than semi-solid die casting, such as forging and common die-casting.

In the first and second embodiment, the example in which the rear suspension bracket is formed by the cross pipe formed by extrusion and the mounting parts welded to the cross pipe has been described. However, the present teaching is not limited thereto, and the rear suspension bracket may be formed by semi-solid die-casting. This allows simultaneously forming the cross pipe and the mounting parts.

In the first and second embodiment, the example in which each of the head pipe and the main frame is formed to have a C-shaped cross section has been described. However, the present teaching is not limited thereto, and the head pipe and the main frame may be formed not to have a C-shaped cross section.

In the first and second embodiment, the example in which the fuel tank is supported by the tank rail (second frame) connected to the head pipe and to the main frame has been described. However, the present teaching is not limited thereto, and the fuel tank may be supported by the main frame (first frame).

In the first and second embodiments, the example in which the main frame (first frame) is integrally formed to extend from the head pipe to rearward and downward where pivot shaft is located has been described. However, the present teaching is not limited thereto, and head pipe side and pivot shaft side of the main frame can be formed separately. It is preferable at this time to set the connecting part for the main frame on the head pipe side and the main frame on the pivot shaft side, between the backstay mounting part and fixing part for fixing the pivot shaft.

The description above discloses (amongst others), an embodiment of a body frame comprising: a head pipe; a first frame connected to the head pipe and supporting a rear arm to which a rear wheel is attached; and a second frame connected at one end to the head pipe and at the other end to the first frame.

The first frame may be directly connected to the head pipe.

The head pipe may extend rearward and may include a frame fixing part connected to the first frame.

A boss for supporting an engine may be formed integrally on the first frame.

The head pipe may have an insertion hole, into which a steering shaft is to be inserted, and a first recess, of which depth extends in the same direction as the insertion hole.

One end of the second frame may be connected to a portion of the head pipe higher than a portion at which the first frame is connected to the head pipe.

The other end of the second frame may be connected to an upper portion of the first frame.

At least one of the head pipe and the first frame may have a C-shaped cross section.

The first frame may be formed by a pair of the first frames; and the pair of first frames may extend rearward with a predetermined spacing therebetween in plan view, and approach to each other toward the head pipe.

The first frame may include a connecting part to be connected to the second frame by being pinched thereby; and the connecting part may have a second recess inside of a portion at which the connecting part is pinched by the second frame.

At least one of the first frame and the head pipe may be formed by semi-solid die casting.

The description further discloses an embodiment of a vehicle comprising: a rear wheel; a rear arm to which the rear wheel is attached; a head pipe; a first frame connected to the head pipe and supporting the rear arm; and a second frame connected at one end to the head pipe and at the other end to the first frame.

The vehicle may further comprise a fuel tank, wherein the second frame supports the fuel tank.

The description above further discloses an embodiment of a head pipe wherein a first frame is connected to the head pipe and supports a rear arm to which a rear wheel is attached; and wherein a body frame comprising a second frame is connected at one end to the head pipe and at the other end to the first frame.

The first frame may be directly connected to the head pipe.

The head pipe may extend rearward and may include a frame fixing portion, at which the first frame is connected to the head pipe.

A boss for supporting an engine may be formed integrally on the first frame.

The head pipe may have an insertion hole, into which a steering shaft is to be inserted, and a first recess, of which depth extends in the same direction as the insertion hole.

One end of the second frame may be connected to a portion of the head pipe higher than a portion at which the first frame is connected to the head pipe. Alternatively, one end of the second frame may be connected to a portion of the head pipe lower than a portion at which the first frame is connected to the head pipe.

The other end of the second frame may be connected to an upper portion of the first frame. Alternatively, the other end of the second frame may be connected to a lower portion of the first frame.

At least one of the head pipe and the first frame may have a C-shaped cross section.

The first frame may be formed by a pair of the first frames; and the pair of first frames may extend rearward with a predetermined spacing therebetween in plan view, and approach to each other toward the head pipe.

The first frame may include a connecting part to be connected to the second frame by being pinched thereby; and the connecting part may have a second recess inside of a portion at which the connecting part is pinched by the second frame.

At least one of the first frame and the head pipe may be formed by semi-solid die casting.

Further, the description discloses an embodiment of a vehicle having rear wheels; a rear arm to which the rear wheel is attached; a head pipe; a first frame connected to the head pipe and supporting the rear arm; and a second frame connected at one end to the head pipe and at the other end to the first frame.

The vehicle may further comprise a fuel tank, wherein the second frame supports the fuel tank.

The description further discloses, to attain the object, a preferred first aspect which provides a body frame including a head pipe; a first frame connected to the head pipe and supporting a rear arm to which a rear wheel is attached; and a second frame connected at one end to the head pipe and at the other end to the first frame.

The body frame according to the first aspect includes, as described above, the first frame connected to the head pipe and supporting the rear arm to which the rear wheel is attached; and the second frame connected at one end to the head pipe and at the other end to the first frame. Hence, connecting the first frame that supports the rear arm, to which the rear wheel is attached, to the head pipe, and provision of the second frame allows securing connection between the head pipe and the first frame. Accordingly, an increase in the number of parts of the body frame can be suppressed while securing the connection between the first frame that supports the rear arm, to which the rear wheel is attached, and the head pipe.

In the body frame according to the first aspect, the first frame is preferably directly connected to the head pipe. This configuration allows further suppressing an increase in the number of parts of the body frame.

In the body frame including the first frame directly connected to the head pipe, the head pipe preferably extends rearward and includes a frame fixing portion at which the first frame is connected to the head pipe. This configuration allows easily and directly connecting the first frame to the head pipe at the frame fixing portion.

In the body frame according to the first aspect, a boss for supporting an engine is preferably formed integrally on the first frame. This configuration allows suppressing an increase in the number of parts required for supporting the engine as compared with that required by another configuration, in which a boss for supporting the engine is formed separately from the first frame.

In the body frame according to the first aspect, the head pipe has an insertion hole, into which a steering shaft is to be inserted, and a first recess, of which depth extends in the same direction as the insertion hole. This configuration allows, during a process of, e.g., forming the head pipe in a cavity die by semi-solid die casting, aligning a direction in which the cavity die is pulled out to the direction along which the insertion hole extends, thereby forming the head pipe having the recess therein easily.

In the body frame according to the first aspect, one end of the second frame is preferably connected to a portion of the head pipe higher than a portion at which the first frame is connected to the head pipe. This configuration allows assuming the second frame as a spring element and change the second frame in accordance with a vehicle. In this case, when the second frame is formed by forging, the cross-sectional shape of the second frame can be changed inexpensively and easily.

In the body frame according to the first aspect, one end of the second frame is preferably connected to a portion of the head pipe lower than a portion at which the first frame is connected to the head pipe. This configuration allows reinforcing the relation between the first frame and the lower part of the head pipe, therefore the rigidity of the first frame can be improved.

In the body frame according to the first aspect, the other end of the second frame is preferably connected to an upper portion of the head pipe. This configuration allows assuming the second frame as a spring element and change the second frame in accordance with a vehicle. In this case, when the second frame is formed by forging, the cross-sectional shape of the second frame can be changed inexpensively and easily.

In the body frame according to the first aspect, the other end of the second frame is preferably connected to a lower portion of the head pipe. This configuration allows reinforcing the relation between the first frame and the lower part of the head pipe, therefore the rigidity of the first frame can be improved.

In the body frame according to the first aspect, at least one of the head pipe and the first frame has a C-shaped cross section. This configuration allows improving flexibility in shape of the at least one of the head pipe and the first frame, thereby manufacturing it easily by die casting, forging, or the like.

In the body frame according to the first aspect, the first frame is preferably formed by a pair of the first frames. The pair of first frames extend rearward with a predetermined spacing therebetween in plan view, and approach to each other toward the head pipe. This configuration allows connecting the pair of first frames that are arranged in plan view in a V-shape or U-shape such that the pair of first frames intersect with each other at a predetermined angle to the head pipe, thereby increasing horizontal rigidity of the body frame.

In the body frame according to the first aspect, the first frame preferably includes a connecting part to be connected to the second frame by being pinched thereby. The connecting part has a second recess inside a portion at which the connecting part is pinched by the second frame. This configuration allows reducing weight of the first frame.

In the body frame according to the first aspect, at least one of the head pipe and the first frame is formed by semi-solid die casting. This configuration allows reducing the sizes and weights of the first frame and the head pipe as compared with those formed by forging or conventional casting. Meanwhile, forging is less flexible in shape and less accurate than semi-solid die casting. When the first frame and the head pipe are to be formed by forging, each of the first frame and the head pipe must have a larger thickness so as to be formed into a recess (C-shape) or a shape with which a predetermined strength can be secured. This results in an increase of the first frame and the head pipe in size and weight. Meanwhile, a product formed by conventional casting is less strong than a product formed by semi-solid die casting. Hence, when the first frame and the head pipe are to be formed by conventional casting, it is necessary to increase the thickness of the first frame and the head pipe to secure a predetermined strength, which increases the sizes and weights of the first frame and the head pipe.

The description further discloses a preferred second aspect which provides a vehicle including a rear wheel; a rear arm to which the rear wheel is attached; a head pipe; a first frame connected to the head pipe and supporting the rear arm; and a second frame connected at one end to the head pipe and at the other end to the first frame.

The vehicle according to the second aspect includes, as described above, the first frame connected to the head pipe and supporting the rear arm to which the rear wheel is attached; and the second frame connected at one end to the head pipe and at the other end to the first frame. Hence, connection of the first frame that supports the rear arm, to which the rear wheel is attached, to the head pipe, and provision of the second frame secure connection between the head pipe and the first frame. Accordingly, an increase in the number of parts of the body frame can be suppressed while securing the connection between the first frame that supports the rear arm, to which the rear wheel is attached, and the head pipe.

In the vehicle according to the second aspect, preferably a fuel tank is further provided, and the second frame supports the fuel tank. This configuration allows supporting the fuel tank by utilizing a connecting part between the head pipe and the first frame.

To attain the object, the description further discloses a preferred third aspect which provides a body frame including a head pipe; a first frame connected to the head pipe and supporting a rear arm to which a rear wheel is attached; and a second frame connected at one end to the head pipe and at the other end to the first frame.

The body frame according to the third aspect includes, as described above, the first frame connected to the head pipe and supporting the rear arm to which the rear wheel is attached; and the second frame connected at one end to the head pipe and at the other end to the first frame. Hence, connecting the first frame that supports the rear arm, to which the rear wheel is attached, to the head pipe, and provision of the second frame allows securing connection between the head pipe and the first frame. Thus, an increase in the number of parts of the body frame can be suppressed while securing the connection between the first frame that supports the rear arm, to which the rear wheel is attached, and the head pipe.

In the body frame according to the third aspect, the first frame is preferably directly connected to the head pipe. This configuration allows further suppressing an increase in the number of parts of the body frame.

In the body frame including the first frame directly connected to the head pipe, the head pipe preferably extends rearward and includes a frame fixing part connected to the first frame. This configuration allows easily and directly connecting the first frame to the head pipe at the frame fixing part.

In the body frame according to the third aspect, a boss for supporting an engine is preferably formed integrally on the first frame. This configuration allows suppressing an increase in the number of parts required for supporting the engine as compared with that required by another configuration, in which a boss for supporting the engine is formed separately from the first frame.

In the body frame according to the third aspect, the head pipe has an insertion hole, into which a steering shaft is to be inserted, and a first recess, of which depth extends in the same direction as the insertion hole. This configuration allows, during a process of, e.g., forming the head pipe in a cavity die by semi-solid die casting, aligning a direction in which the cavity die is pulled out to the direction along which the insertion hole extends, thereby forming the head pipe having the recess therein easily.

In the body frame according to the third aspect, one end of the second frame is preferably connected to a portion of the head pipe higher than a portion at which the first frame is connected to the head pipe. This configuration allows assuming the second frame as a spring element and change the second frame in accordance with a vehicle. Furthermore, when the second frame is formed by forging, a cross-sectional shape of the second frame can be changed inexpensively and easily.

In the body frame according to the third aspect, the other end of the second frame is preferably connected to an upper portion of the head pipe. This configuration allows assuming the second frame as a spring element and change the second frame in accordance with a vehicle. Furthermore, when the second frame is formed by forging, the cross-sectional shape of the second frame can be changed inexpensively and inexpensively.

In the body frame according to the third aspect, at least one of the head pipe and the first frame has a C-shaped cross section. This configuration allows improving flexibility in shape of the at least one of the head pipe and the first frame, thereby manufacturing it easily by die casting, forging, or the like.

In the body frame according to the third aspect, the first frame is preferably formed by a pair of the first frames. The pair of first frames extend rearward with a predetermined spacing therebetween in plan view, and approach to each other toward the head pipe. This configuration allows connecting the pair of first frames that are arranged in plan view in a V-shape or U-shape such that the pair of first frames intersect with each other at a predetermined angle to the head pipe, thereby increasing horizontal rigidity of the body frame.

In the body frame according to the third aspect, the first frame preferably includes a connecting part to be connected to the second frame by being pinched thereby. The connecting part has a second recess inside a portion at which the connecting part is pinched by the second frame. This configuration allows reducing weight of the first frame.

In the body frame according to the third aspect, at least one of the head pipe and the first frame is formed by semi-solid die casting. This configuration allows reducing the sizes and weights of the first frame and the head pipe as compared with those formed by forging or conventional casting. Meanwhile, forging is less flexible in shape and less accurate than semi-solid die casting. When the first frame and the head pipe are to be formed by forging, each of the first frame and the head pipe must have a larger thickness so as to be formed into a recess (C-shape) or a shape with which a predetermined strength can be secured. This results in an increase of the first frame and the head pipe in size and weight. Meanwhile, a product formed by conventional casting is less strong than a product formed by semi-solid die casting. Hence, when the first frame and the head pipe are to be formed by conventional casting, it is necessary to increase the thicknesses of the first frame and the head pipe to secure a predetermined strength, which increases the sizes and weights of the first frame and the head pipe.

The description still further discloses a preferred fourth aspect which provides a vehicle including a rear wheel; a rear arm to which the rear wheel is attached; a head pipe; a first frame connected to the head pipe and supporting the rear arm; and a second frame connected at one end to the head pipe and at the other end to the first frame.

The vehicle according to the fourth aspect includes, as described above, the first frame connected to the head pipe and supporting the rear arm to which the rear wheel is attached; and the second frame connected at one end to the head pipe and at the other end to the first frame. Hence, connection of the first frame that supports the rear arm, to which the rear wheel is attached, to the head pipe, and provision of the second frame secure connection between the head pipe and the first frame. Accordingly, an increase in the number of parts of the body frame can be suppressed while securing the connection between the first frame that supports the rear arm, to which the rear wheel is attached, and the head pipe.

In the vehicle according to the fourth aspect, preferably a fuel tank is further provided, and the second frame supports the fuel tank. This configuration allows supporting the fuel tank by utilizing a connecting part between the head pipe and the first frame.

The description yet further discloses, in order to provide a body frame that allows suppressing an increase in the number of parts of the body frame, an embodiment of a body frame 9 which includes a main frame 3 connected to a head pipe 2 and supports a rear arm 20 to which a rear wheel 21 is attached, and a tank rail 4 connected to the head pipe 2 at one end and to the main frame 3 at the other end.

## Claims

1. Body frame (9), in particular for a vehicle (1), comprising:
a head pipe (2);
a first frame member (3) connected to the head pipe (2) and supporting a rear arm (20) to which a rear wheel (21) is attached; and
a second frame member (4) connected at one end to the head pipe (2) and at the other end to the first frame member (3).

2. Body frame according to claim 1, wherein the first frame member (3) is directly connected to the head pipe (2).

3. Body frame according to claim 1 or 2, wherein the head pipe (2) comprises a body section (2c) which extends rearward and includes a frame fixing part (2f,2g) connected to the first frame member (3).

4. Body frame according to one of the claims 1 to 3, wherein a boss (3g) for supporting an engine (15) is formed integrally on the first frame member (3).

5. Body frame according to one of the claims 1 to 4, wherein the head pipe (2) has an insertion hole (2a), into which a steering shaft (11) is to be inserted, and a first recess (2h), of which depth extends in the same direction as the insertion hole (2a).

6. Body frame according to one of the claims 1 to 5, wherein one end of the second frame member (4) is connected to a portion of the head pipe (2) higher than a portion at which the first frame member (3) is connected to the head pipe (2).

7. Body frame according to claim 6, wherein the other end of the second frame member (4) is connected to an upper portion (3c,3d) of the first frame member (3).

8. Body frame according to one of the claims 1 to 7, wherein at least one of the head pipe (2) and the first frame member (3) has a C-shaped cross section.

9. Body frame according to one of the claims 1 to 8, wherein the first frame member (3) is formed by a pair of the first frames (3a,3b), and the pair of first frames (3a,3b) extend rearward with a predetermined spacing therebetween in plan view, and approach to each other toward the head pipe (2).

10. Body frame according to one of the claims 1 to 9, wherein the first frame member (3) includes a connecting part (3c) to be connected to the second frame member (4) by being pinched thereby, and the connecting part (3c) has a second recess (3e) inside of a portion at which the connecting part (3c) is pinched by the second frame member (4).

11. Body frame according to one of the claims 1 to 10, wherein the first frame member is the main frame (3) and the second frame member is the tank rail (4) or a reinforcement member arranged in that a front end of the tank rail (4) or of the reinforcement member is connected to the head pipe (2), and a rear end of the tank rail (4) or of the reinforcement member is connected to the main frame (3).

12. Body frame according to one of the claims 1 to 11, wherein at least one of the first frame member (3) and the head pipe (2) is formed by semi-solid die casting.

13. Vehicle, in particular motorcycle, comprising:
a rear wheel (21);
a rear arm (20) to which the rear wheel (21) is attached;
and a body frame according to one of the claims 1 to 12, having a head pipe (2);
a first frame member (3) connected to the head pipe (2) and supporting the rear arm (20); and
a second frame member (4) connected at one end to the head pipe (2) and at the other end to the first frame member (3).

14. Vehicle according to claim 13, further comprising a fuel tank, wherein the second frame member (4) supports the fuel tank.

15. Head pipe for use in a body frame for a vehicle, in particular according to one of the claims 1 to 12, comprising a first section (2b) for accommodating part of a front fork of the vehicle, and a body section (2c) extending downward from the rear of the first section (2b) which includes a frame fixing portion for connection with a main frame (3) of the vehicle.
